Europäisches Patentamt

European Patent Office

Office européen des brevets

(19)

(11) **EP 1 241 043 A1**

(12) **DEMANDE DE BREVET EUROPEEN**

(43) Date de publication:
**18.09.2002 Bulletin 2002/38**

(51) Int Cl.⁷: **B60L 11/12**, B60K 41/00,
B60K 6/02

(21) Numéro de dépôt: **02004997.9**

(22) Date de dépôt: **06.03.2002**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **14.03.2001 FR 0103494**

(71) Demandeur: **Conception et Développement
Michelin S.A.
1762 Givisiez (CH)**

(72) Inventeurs:
• **Charaudeau, Jean-Jacques
1741 Cottens (CH)**
• **Magne, Pierre Alain
1782 Belfaux (CH)**

(74) Mandataire: **Bauvir, Jacques
Michelin & Cie,
Service SGD/LG/PI-LAD
63040 Clermont-Ferrand Cedex 09 (FR)**

(54) **Véhicule hybride série capable de fonctionner sans batterie**

(57)     Véhicule hybride série comportant un moteur thermique (10) entraînant un alternateur (11), ledit moteur thermique ayant une puissance disponible à l'arbre de sortie du moteur thermique, au moins un moteur électrique de traction (21) connecté à l'alternateur par une ligne électrique (12) et un onduleur (22), l'onduleur permettant de faire fonctionner le moteur électrique de traction à un couple de consigne, la ligne électrique permettant le transfert d'une puissance électrique de traction, une commande d'accélérateur CA à disposition du conducteur du véhicule, un actionneur (15) agissant sur le moteur thermique, un dispositif de pilotage (32) pilotant la position de l'actionneur en fonction de la position de la commande d'accélérateur, jusqu'à une limitation au moins lorsque le couple de consigne atteint le couple maximal du moteur électrique de traction, une unité de pilotage (31) du couple de propulsion du véhicule, permettant de calculer en permanence, selon une période d'échantillonnage choisie, ledit couple de consigne en fonction de la vitesse du véhicule et en fonction d'une puissance de pilotage P évaluant la puissance disponible à l'arbre de sortie du moteur thermique en fonction du régime réel du moteur thermique.

Fig. 1

**EP 1 241 043 A1**

**Description**

La présente invention concerne les véhicules automobiles routiers, à motorisation hybride série. Dans les véhicules de ce type, un moteur thermique entraîne un alternateur électrique qui transforme l'énergie mécanique disponible à l'arbre du moteur thermique en énergie électrique. Cette énergie électrique alimente un ou des moteurs électriques de traction, reliés mécaniquement aux roues motrices du véhicule. Le moteur thermique n'est pas relié mécaniquement aux roues, contrairement aux véhicules à motorisation hybride parallèle, dans lesquels un moteur thermique et un moteur électrique sont tous les deux reliés mécaniquement aux roues motrices, les couples qu'ils délivrent pouvant s'additionner pour entraîner les roues motrices.

Les conducteurs de véhicules automobiles à motorisation classique (par l'expression « motorisation classique », on vise ici un moteur thermique et une boîte de vitesse, mécanique ou automatique) sont familiarisés avec les commandes d'accélération et de freinage bien connues dans l'état de la technique. Ces commandes ont atteint un haut degré de progressivité et de réactivité. Il est souhaitable qu'un véhicule hybride puisse se conduire sensiblement de la même façon si l'on veut ne pas dérouter un conducteur habitué aux motorisations classiques. Il s'agit donc de pouvoir transformer les actions d'un conducteur sur la pédale d'accélérateur, et plus généralement sur les pédales d'accélérateur et de freinage, en actions judicieuses sur la régulation de la chaîne de traction partant du moteur thermique et aboutissant à un ou des moteurs électriques de traction.

Il est bien connu d'installer une batterie d'accumulateurs électriques en tampon entre l'alternateur et le moteur électrique, notamment dans le cas où l'on souhaite pouvoir entraîner le véhicule en mode électrique pur, moteur thermique coupé. Dans ce cas, la régulation du moteur thermique et le pilotage (au sens électrique du terme) du moteur électrique de traction peuvent être indépendants. Il n'y a pas de problème particulier à piloter le couple d'un moteur électrique, qui puise son énergie dans une batterie d'accumulateurs électriques, avec toute la progressivité et la réactivité voulues à la pédale d'accélérateur à disposition du pilote.

Mais l'utilisation d'une batterie d'accumulateurs électriques pose différents problèmes. Une telle batterie a une masse élevée au regard de la quantité d'énergie électrique stockée. Cela augmente considérablement la masse d'un véhicule et est source de gaspillage lors des accélérations, sans parler des problèmes de comportement dynamique d'un véhicule, d'autant plus cruciaux que le véhicule est lourd. En outre, de telles batteries posent des problèmes d'entretien et des problèmes pour l'environnement en raison des nombreuses matières polluantes et difficiles à recycler qu'elles contiennent.

Le but de la présente invention est donc de concevoir une chaîne de traction hybride série qui puisse éventuellement fonctionner sans batterie d'accumulateurs électriques, tout en offrant au conducteur du véhicule une commande d'accélérateur très progressive et très réactive. Dans le cas où l'on ne dispose pas d'un réservoir d'énergie électrique (batterie), il est nécessaire d'être capable de produire l'énergie électrique juste nécessaire à la demande. Le problème qui se pose est donc d'obtenir le couple voulu au moteur électrique de traction tout en évitant le calage ou l'emballement du moteur thermique, et ceci au moyen d'une commande dont la progressivité et la réactivité soient aussi proches que possible de celles d'une pédale d'accélérateur de véhicule thermique classique.

L'invention propose une chaîne de traction pour véhicule hybride série, ladite chaîne de traction comportant :

- un moteur thermique entraînant un alternateur, ledit moteur thermique ayant une puissance disponible à l'arbre de sortie du moteur thermique ;
- au moins un moteur électrique de traction connecté à l'alternateur par une ligne électrique et un onduleur, l'onduleur permettant de faire fonctionner le moteur électrique de traction à un couple de consigne, la ligne électrique permettant le transfert d'une puissance électrique de traction ;
- une commande d'accélérateur à disposition du conducteur du véhicule ;
- un actionneur agissant sur le moteur thermique ;
- un dispositif de pilotage pilotant la position de l'actionneur en fonction de la position de la commande d'accélérateur, jusqu'à une limitation au moins lorsque le couple de consigne atteint le couple maximal du moteur électrique de traction ;
- une unité de pilotage du couple de propulsion du véhicule, permettant de calculer en permanence ledit couple de consigne en fonction de la vitesse du véhicule et en fonction d'une puissance de pilotage évaluant la puissance disponible à l'arbre de sortie du moteur thermique en fonction du régime réel du moteur thermique.

Le moteur thermique est de n'importe quel type que l'on puisse contrôler par une commande variable comme une pédale d'accélérateur. On connaît par exemple les moteurs diesel, dans lesquels la commande agit sur la quantité de carburant injecté dans la chambre de combustion. On connaît aussi les moteurs à essence, dans lesquels la commande agit sur la quantité d'air admise dans la chambre de combustion. Ces exemples ne sont pas limitatifs. La commande d'injection de carburant d'un moteur diesel, de même que la commande de papillon d'un moteur à essence, sont un « actionneur PP » dans le contexte de la présente invention.

Quant au moteur électrique de traction, il peut y en avoir un seul, ou plusieurs, par exemple un par roue du véhicule. S'il y a plusieurs moteurs électriques de traction, il faut comprendre par « couple de consigne C » un couple global cumulé pour tous les moteurs, la présente invention ne concernant pas la question de la répartition du couple entre les moteurs. Quant au type de moteur électrique, il s'agit d'un moteur dont on peut piloter le couple délivré à l'arbre de rotation, en amplitude et en signe. C'est par exemple une machine synchrone auto pilotée, à concentration de flux, à inducteur à aimants permanents.

L'alternateur utilisé est par exemple une machine électrique du même type que celle proposée pour le moteur électrique de traction. L'alternateur transforme l'énergie mécanique disponible à l'arbre de sortie du moteur thermique en énergie électrique consommée par la charge électrique connectée à la ligne électrique sur laquelle ledit alternateur débite (pour cet exposé, la charge électrique est principalement le ou les moteurs électriques de traction).

La puissance de pilotage P procède d'une évaluation de la puissance du moteur thermique disponible $P_{thd}$. Ladite puissance de pilotage P n'est pas l'image exacte de la puissance réellement disponible $P_{thd}$ à l'arbre du moteur thermique. On donnera ci-dessous différentes courbes de puissance de pilotage en fonction du régime réel R, courbes que l'on superpose aux courbes réelles de puissance disponible $P_{thd}$ pour différentes positions de l'actionneur PP. Puisque la puissance de pilotage P procède d'une approximation plus ou moins proche de la réalité, le point de fonctionnement du moteur thermique donnant une puissance particulière en fonction du régime moteur réel R ne correspond pas nécessairement à un équilibre entre la puissance réellement disponible $P_{thd}$ et la puissance consommée sous forme électrique par les charges connectées à l'alternateur. Le calcul du couple de consigne C est effectué par itérations successives. Tant qu'il y a un écart entre la puissance délivrée par le moteur thermique et la puissance consommée sous forme électrique, le régime du moteur thermique évolue, donc l'évaluation de la puissance réellement disponible $P_{thd}$ évolue. L'itération suivante du calcul du couple de consigne C par l'unité de pilotage détermine une nouvelle valeur pour ledit couple de consigne C, ce qui provoque une variation de la puissance électrique consommée par les charges connectées à l'alternateur, ceci tendant à diminuer l'écart, et ainsi de suite jusqu'à annuler l'écart.

On va expliquer ci-dessous comment on peut choisir une courbe de puissance de pilotage (appelée plus simplement ci-dessous « courbe de pilotage ») en fonction du régime réel R, de sorte que ladite puissance électrique consommée par les charges connectées à l'alternateur tende à équilibrer la puissance disponible.

Soulignons que, selon un aspect de la présente invention, la commande d'accélérateur CA à disposition du conducteur n'agit pas directement sur le couple de consigne C du moteur électrique de traction. Elle agit sur le moteur thermique. Le couple de consigne C du moteur électrique de traction est adapté automatiquement au fonctionnement réel du moteur thermique. Ainsi, la commande d'accélérateur CA agit directement sur l'actionneur PP. Ledit actionneur PP tient également compte du couple absorbé par le moteur électrique de traction car celui-ci est nécessairement limité, sous peine de destruction du moteur électrique en cas de courant trop intense. En effet, à basse vitesse de déplacement du véhicule, on atteint la saturation (courant maxi admissible par le moteur électrique et par l'onduleur) pour de faibles niveaux de puissance. Pour éviter l'emballement du moteur thermique, il convient d'écrêter la demande d'accélération provenant du conducteur. Ce n'est qu'en deçà de la saturation du moteur électrique que l'on peut lier, par exemple proportionnellement, le pilotage de l'actionneur PP à la commande d'accélérateur CA sur laquelle le conducteur agit directement.

Bien entendu, dans la mesure où l'on dispose d'énergie électrique sur la ligne électrique évoquée, on peut envisager de brancher différentes charges électriques autres que le ou les moteurs électriques de traction. Dans certains cas, ne fût-ce qu'en phase transitoire, ces autres charges électriques peuvent absorber une puissance électrique importante, parfois plus importante que le moteur électrique de traction, voire plus importante que la puissance disponible. Il convient alors d'apporter différents correctifs au principe de régulation expliqué ci-dessus, ce que l'on abordera dans la suite.

D'autres souhaits particuliers, comme la recherche d'une moindre consommation du moteur thermique, ou quelques autres perfectionnements envisageables, seront aussi évoqués avec la description qui va suivre, d'un exemple donné à titre non limitatif, en se référant au dessin annexé sur lequel :

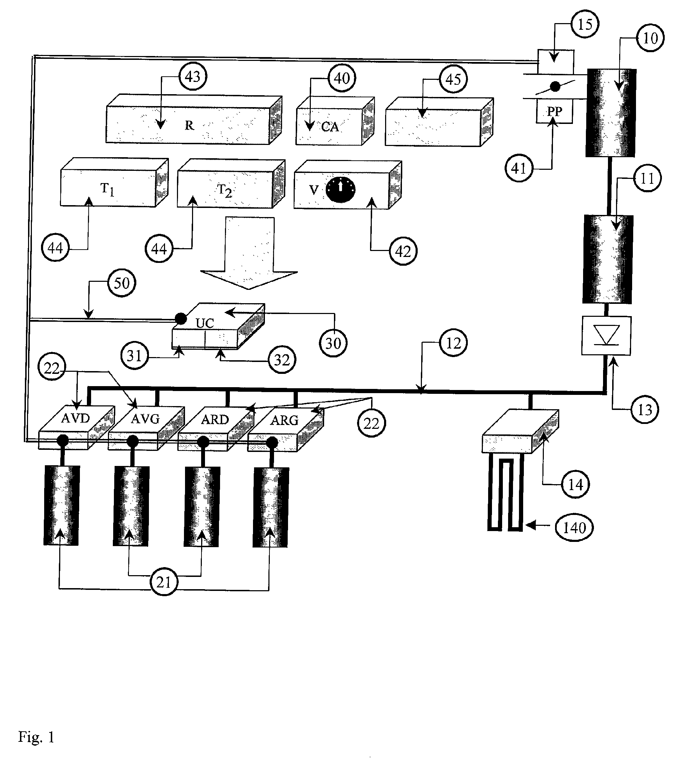

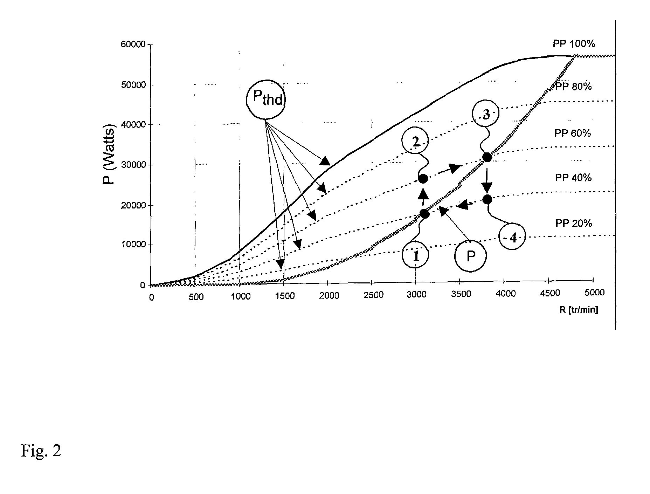

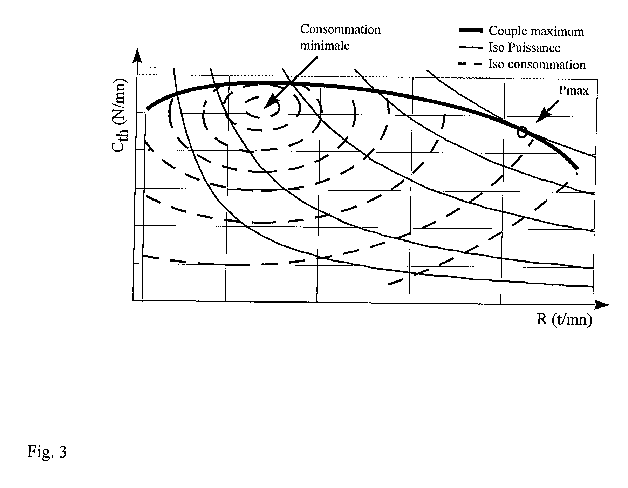

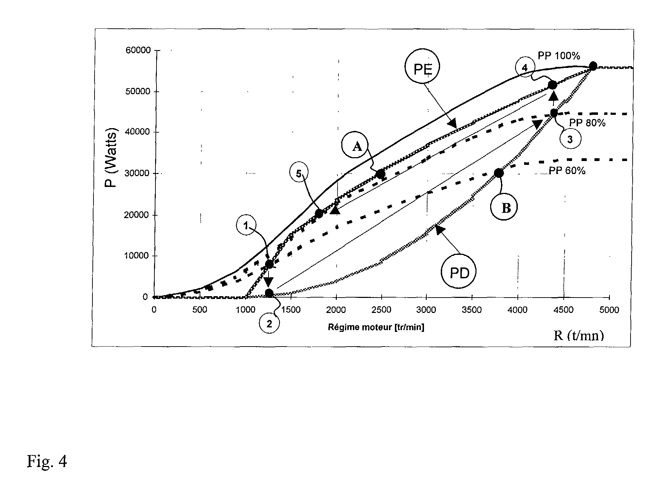

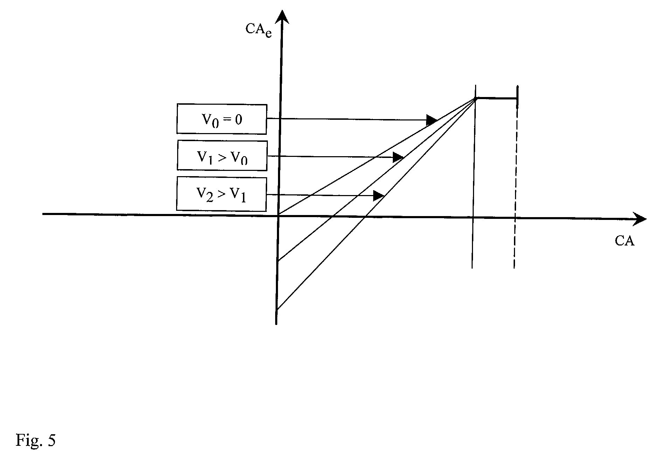

- ■ la figure 1 est un schéma général d'une chaîne de traction pour véhicule hybride série selon l'invention ;
- ■ la figure 2 est un diagramme donnant la puissance du moteur thermique en fonction de son régime de rotation, pour différentes valeurs de l'actionneur PP ;
- ■ la figure 3 est une cartographie faisant figurer les iso-consommations dans un diagramme donnant le couple du moteur thermique en fonction de son régime de rotation ;
- ■ la figure 4 est un diagramme donnant la puissance du moteur thermique en fonction de son régime de rotation, sur lequel on a représenté différents points de fonctionnement ;
- ■ la figure 5 est un schéma représentant le fonctionnement de la commande d'accélérateur.

A la figure 1, on voit un moteur thermique à essence 10, et un actionneur 15 contrôlant la position d'un papillon dans une tubulure d'admission d'air. Le moteur thermique entraîne un alternateur 11. L'énergie électrique fournie par ce dernier est distribuée vers quatre moteurs électriques de traction 21, via un redresseur 13, une ligne électrique 12, et un onduleur 22 par moteur 21. Un dispositif d'absorption 14 d'énergie électrique est connecté à la ligne électrique 12.

Une unité centrale 30 gère différentes fonctions, parmi lesquelles la chaîne de traction électrique du véhicule (couple moteur ou freineur des moteurs électriques 21). L'unité centrale 30 comprend une unité de pilotage 31 du couple de propulsion des moteurs électriques 21 et un dispositif électronique 32 de pilotage de l'actionneur 15 agissant sur la position du papillon PP, ce qui agit sur la puissance développée par le moteur thermique 10. L'unité de pilotage 31 du couple de propulsion du véhicule calcule ledit couple de consigne selon une période d'échantillonnage choisie. L'unité centrale 30 reçoit des signaux d'évaluation de différents paramètres comme un potentiomètre 40 reflétant la position d'une commande d'accélérateur CA (une pédale ou autre commande équivalente à disposition du conducteur du véhicule), comme un capteur 41 reflétant la position du papillon PP, un capteur 42 donnant la vitesse v du véhicule, un capteur 43 donnant le régime R du moteur thermique, différents capteurs de température 44, un capteur 45 donnant la pression du circuit hydraulique de freinage du véhicule, la liste étant non exhaustive.

Dans un véhicule réel, d'autres organes périphériques absorbent de la puissance délivrée par le moteur thermique. En ce qui concerne la présente invention, il importe peu qu'ils prélèvent une puissance mécanique directement au vilebrequin du moteur thermique ou qu'ils prélèvent une puissance électrique sur la ligne électrique 12 car cela revient à prélever ladite puissance au vilebrequin via l'alternateur. Indiquons simplement que certains de ces organes périphériques peuvent aussi être gérés par l'unité centrale 30, ce qui présente l'intérêt de pouvoir tenir compte des variations de puissance consommées dans le dispositif de pilotage 32 de l'actionneur 15 avant même que le régime du moteur thermique ait pu s'en trouver modifié.

Les moteurs électriques de traction 21 sont des moteurs synchrones triphasés, équipés d'un capteur de position angulaire de type résolveur et sont pilotés par les onduleurs 22, sous le contrôle de l'unité 31 de pilotage du couple de propulsion. L'électronique est conçue pour piloter les moteurs en couple. De ce fait l'ensemble de traction peut être utilisé en moteur et en frein.

L'actionneur 15 est constituée essentiellement par un petit moteur électrique à courant continu, accouplé au papillon des gaz du moteur thermique. Ce moteur est géré par une électronique et, grâce à un capteur de position 41 (potentiomètre), le papillon est asservi en permanence en position. La position papillon générée dépend bien entendu du couple souhaité pour le moteur électrique de traction (couple qui peut être négatif), et est aussi adaptée en fonction d'une éventuelle consommation trop importante par des organes périphériques.

Un bus CAN® 50 (Controller Area Network) assure l'interconnexion des différents organes. Ceci permet à l'unité centrale 30, choisie comme maître du réseau, de recevoir notamment la vitesse de la roue entraînée par le moteur électrique 21 et un diagnostic sur le fonctionnement en provenance des onduleurs 22, et d'émettre un couple de consigne C à destination des onduleurs 22.

Venons en à la description de la gestion du fonctionnement de la chaîne de traction. Le capteur 40 donnant la position de la pédale d'accélérateur délivre un signal qui permet de réaliser les 3 fonctions suivantes : accélération normale, accélération maximale possible (comparable à la position dite « kick-down » dans les véhicules classiques à boîte de vitesses automatique), et frein moteur. On laisse de côté pour le moment le fonctionnement en frein moteur.

Reportons-nous à la figure 2. On y voit un faisceau de courbes représentant la puissance réelle $P_{thd}$ du moteur thermique, en régime établi, pour différentes positions du papillon d'air. Ces courbes sont représentatives de caractéristiques réelles d'un moteur à essence d'un véhicule de tourisme. L'unité centrale 30 ne comporte aucune instruction programmée représentative de ces caractéristiques réelles. Par ailleurs, on voit une courbe de pilotage P de la traction électrique (puissance de pilotage). Cette courbe visualise des instructions programmées dans l'unité 31 de pilotage du couple de propulsion.

Examinons différentes situations. On raisonne à partir d'un régime établi, quelconque mais loin de la saturation en courant des moteurs de traction, et en négligeant la consommation d'énergie par des organes périphériques. En fonction de ce régime, pour une certaine position du papillon, le moteur délivre une certaine puissance qui doit être consommée par les moteurs électriques de traction 21 pour que l'ensemble soit en équilibre. Par exemple, à 3100 tr/min et pour une ouverture papillon à 40%, le moteur thermique délivre 18000 Watts (point de fonctionnement ① ), et la consigne couple C qui équilibre le système est la division de la puissance disponible par la vitesse du véhicule.

S'il n'y a pas égalité entre la puissance disponible et la puissance électrique consommée résultant de la consigne de couple C pilotée, le régime du moteur thermique va évoluer. Pour une courbe de pilotage P telle que celle de la figure 2, on constate qu'il y a autorégulation.

Supposons que l'on parte du point de fonctionnement ① donné ci-dessus. Lorsque l'on enfonce la pédale d'accélérateur, le dispositif de pilotage 32 ordonne à l'actionneur 15 d'ouvrir plus le papillon d'air. Pour fixer les idées, si le papillon est réglé à 60 % d'ouverture suite à l'action du conducteur sur l'accélérateur, au régime initial de 3100 tr/min, le moteur fournit réellement 27000 Watts (point de fonctionnement ② ). A l'instant initial, la puissance électrique consommée par la traction n'ayant pas changé, la puissance électrique consommée par la traction est inférieure à la puissance fournie par le moteur thermique. Le régime du moteur thermique 10 va donc augmenter. Dès que le régime augmente, la consigne calculée pour le couple C augmente automatiquement, comme déterminé par la courbe de pilotage P de la traction électrique. Celle-ci donne une nouvelle valeur de la puissance à absorber par les moteurs électriques de traction 21, ce qui compte tenu de la vitesse du véhicule donne immédiatement un nouveau couple de consigne C. On voit que le moteur thermique va se stabiliser à un régime de 3800 tr/min (point de fonctionnement ③ , à l'intersection de la courbe de pilotage P et la courbe caractéristique réelle du moteur thermique pour une ouverture papillon à 60 %), régime auquel la puissance électrique consommée par la traction est égale à la puissance fournie par le moteur thermique, soit 31000 Watts.

Imaginons que l'on ramène la position du papillon à 40 % d'ouverture. Au régime initial de 3800 tr/min, le moteur ne peut plus fournir que 21000 Watts (point de fonctionnement ④ ). La puissance électrique consommée par la traction étant restée supérieure à la puissance fournie par le moteur thermique, ce dernier va perdre des tours et se stabiliser à un régime de 3100 tr/min (point de fonctionnement ① , à l'intersection de la courbe de pilotage P et la courbe caractéristique réelle du moteur thermique pour une ouverture papillon à 40 %), régime auquel la puissance électrique consommée par la traction est égale à la puissance fournie par le moteur thermique, soit 18000 Watts.

Par ce principe, on assure que la puissance n'est consommée que lorsqu'elle est réellement disponible (pas de calage ni d'emballement du moteur thermique). Le fonctionnement de la chaîne de traction est stable car, pour une courbe de pilotage P de la traction électrique telle que montrée à la figure 2, même sans connaître les caractéristiques réelles du moteur thermique (celles-ci peuvent évoluer au cours du temps notamment en fonction de l'usure), à chaque position du papillon, il y a un seul point de fonctionnement sur ladite courbe de pilotage P. Autrement dit, il est avantageux (car c'est une façon de garantir un fonctionnement toujours stable) que, pour toutes les positions de l'actionneur PP, la courbe de puissance de pilotage P choisie ait une seule intersection avec la courbe de puissance réellement disponible $P_{thd}$. De préférence, la courbe de pilotage P choisie rejoint la courbe de caractéristiques réelles du moteur thermique pour une ouverture papillon de 100 % au régime de puissance maximale du moteur thermique.

Pour des vitesses véhicule faibles, on a vu qu'il n'est pas possible de consommer toute la puissance disponible car, comme on l'a déjà exposé, les moteurs électriques sont limités en courant, donc en couple. Plus généralement, d'autres causes de limitation du couple du moteur électrique de traction pourraient intervenir. Citons l'exemple d'une fonction anti-patinage.

De façon avantageuse, afin d'améliorer la finesse de fonctionnement du système, la valeur de la limite de la position papillon peut être adaptée par le correcteur suivant : les moyens de pilotage de l'actionneur 15 calculent en permanence, à chaque itération, une position limite comme suit : Limite position papillon = Position papillon maxi - k $^*(P_{thd} - P_a - P_t)$

Le terme $P_t$ est la puissance utilisée pour la traction du véhicule et le terme $P_a$ est une puissance annexe, non utilisée pour la traction. On a déjà évoqué la consommation de puissance par les organes périphériques. Il est avantageux de tenir également compte de différentes pertes comme on va l'expliquer ci-dessous. L'ensemble des pertes et de la puissance consommée par les organes périphériques est la puissance annexe visée ici.

On a vu que le calcul du couple de consigne C sur la base de la puissance de pilotage P converge toujours vers un fonctionnement stable. L'homme du métier aura compris que l'on converge d'autant plus vite que l'on peut dans le calcul mieux tenir compte des causes de variations de puissances autres que celles résultant des actions du conducteur du véhicule. Dans cette variante, on propose de tenir compte d'une puissance annexe non utile à la traction (terme $P_a$). Les pertes sont la somme des pertes fer, des pertes par effet Joule, à l'alternateur et au moteur électrique de traction, des pertes dans les onduleurs, au redresseur, et d'autres encore. On peut modéliser toutes ces pertes des organes électriques cités (mesures, expérimentations, calculs, ...). Cette modélisation peut être chargée dans l'unité centrale 30, et la mesure ou la connaissance des différents paramètres comme la température de fonctionnement des différents organes, les vitesses de rotation, les courants électriques, le couple de consigne C, permettent de calculer un terme $P_a$ (Puissance annexe) à chaque itération.

On peut qualifier le fonctionnement selon la courbe de pilotage P exposé ci-dessus de dynamique, parce qu'il assure une excellente réponse à l'accélérateur, un peu comme sur les rapports de vitesses les plus courts avec un véhicule classique à boîte de vitesse mécanique.

Mais on sait par ailleurs que le rendement thermodynamique d'un moteur thermique classique n'est pas indépendant de sa charge, c'est à dire de l'ouverture papillon pour un moteur à essence.

Comme le montre la figure 3 donnant en ordonnées le couple $C_{th}$ du moteur thermique et en abscisses le régime R du moteur thermique, la consommation spécifique d'un moteur thermique varie avec le régime et la charge du moteur thermique. Pour une puissance disponible $P_{thd}$ donnée, le point de fonctionnement offrant le minimum de consommation de carburant se situe plutôt aux régimes moteurs faibles et, on le sait, à ouverture papillon élevée.

On va décrire maintenant une réalisation avantageuse dont l'objectif est de toujours tendre vers une moindre consommation de carburant. Il s'agit de faire évoluer le point de fonctionnement vers une charge moteur plus élevée, sans préjudice d'une bonne réponse à l'accélérateur. On propose ci-dessous les moyens pour que le pilotage évolue automatiquement entre un pilotage économique et un pilotage dynamique.

Ayant observé qu'une zone de fonctionnement favorable en consommation se situe à un régime plutôt bas et une ouverture papillon plutôt grande, on utilise aussi une courbe de puissance de pilotage économique PE (également appelée plus simplement « pilotage économique ») telle que tracée à la figure 4. A la figure 4, on a aussi reporté une courbe de puissance de pilotage comparable à celle de la figure 2, dite courbe de pilotage dynamique PD. Entre les courbes PE et PD, on s'aperçoit que la même puissance peut être obtenue à des points de fonctionnement différents.

La courbe de pilotage PD de la figure 4 est la même que la courbe de pilotage P de la figure 2. Sur cette courbe, on voit qu'une puissance de 30000 Watts est obtenue à un régime d'environ 3750 tr/min et une position papillon voisine de 60 % d'ouverture (point de fonctionnement « B »), alors que sur la courbe PE, on voit que la même puissance de 30000 Watts est obtenue à un régime d'environ 2500 tours/minute et une position papillon voisine de 80% d'ouverture (point de fonctionnement « A »).

Si la programmation de l'unité 31 de pilotage du couple de propulsion est basée uniquement sur une telle courbe de pilotage économique PE, et que le conducteur éprouve le besoin d'accélérer, la réaction de la chaîne globale de traction à une action appropriée sur la commande d'accélérateur CA est plus lente que la réaction à la même action appropriée sur la commande d'accélérateur CA dans le cas où la programmation de l'unité 31 de pilotage du couple de propulsion est basée sur la courbe de pilotage dynamique PD. En effet, dans le premier cas, l'actionneur PP est dans une position bien plus proche de l'ouverture papillon maximale que dans le deuxième cas. La réserve d'accélération est bien moindre dans le cas du pilotage économique que dans le cas du pilotage dynamique. Dès lors, dans le cas du pilotage économique, le moteur thermique met beaucoup plus de temps pour monter en régime et donner une puissance supérieure. En conséquence, la consigne couple C augmente moins vite et le véhicule accélère moins fort. La réponse à l'accélérateur est lente, un peu comme sur les rapports de vitesses les plus longs avec un véhicule classique à boîte de vitesse mécanique.

C'est pourquoi il est proposé, dans une variante de réalisation très avantageuse, d'utiliser en fait un ensemble de courbes de pilotage, afin de varier automatiquement et progressivement de la courbe de pilotage dynamique PD à la courbe de pilotage économique PE, ces deux courbes étant les limites du fonctionnement de la chaîne de traction. Cela signifie que le pilotage effectif va varier automatiquement entre un mode limite qui optimise le caractère dynamique de la réponse à une demande d'accélération, et un autre mode limite qui optimise le rendement énergétique. La courbe de pilotage programmée dans l'unité 31 de pilotage du couple de propulsion est la suivante :

$$P = Pmax \cdot \left( \frac{\text{Régime - Régime ralenti}}{\text{Régime maxi - Régime ralenti}} \right)^{\text{Réglage}} ,$$

où « Réglage » est un paramètre de fonctionnement, « Régime » est le régime du moteur thermique au moment du calcul, « Régime ralenti » est le régime du moteur thermique au ralenti, « Régime maxi » est le régime du moteur thermique utilisé au point de puissance maximale.

De préférence, on choisit le paramètre « Réglage » en fonction des courbes caractéristiques du fonctionnement du moteur thermique utilisé.

A titre d'exemple non limitatif, on définit fort correctement un pilotage selon une courbe de pilotage dynamique PD pour une valeur du paramètre « Réglage » de l'ordre de 1.5 (= Réglage dynamique), et on définit fort correctement un pilotage selon une courbe de pilotage économique PE pour une valeur du paramètre « Réglage » de l'ordre de 0.7 (Réglage économique). Les valeurs données ci-dessus ne sont qu'indicatives. Il convient de les déterminer au mieux, par exemple expérimentalement, en fonction de chaque cas. Une valeur élevée de ce paramètre correspond à un pilotage dynamique, alors qu'une valeur faible correspond à un pilotage économique.

Les modes limites étant déterminés, on peut très aisément faire varier automatiquement le paramètre « Réglage » de la façon suivante : le paramètre « Réglage », à partir d'une valeur maximale « Réglage dynamique » choisie pour assurer un pilotage dynamique, tend toujours vers la valeur « Réglage économique » , sauf en cas de demande d'accélération par le conducteur..

Ceci permet d'évoluer automatiquement vers la courbe PE quand le conducteur n'accélère pas, et d'évoluer automatiquement vers la courbe PD lorsque le conducteur accélère, et réciproquement.

Ceci peut se faire en temps réel, pendant le roulage, grâce par exemple à une analyse simple d'informations pertinentes pour apprécier le style de conduite du véhicule par le conducteur. On peut tenir compte par exemple de la vitesse du véhicule, de la position de la commande d'accélérateur CA, et surtout des variations de cette position, notamment des vitesses de variation, du temps écoulé depuis la dernière variation.

Dans une autre variante de réalisation, on introduit une limite basse pour le paramètre « Réglage » afin de conférer au véhicule une grande souplesse de manoeuvre à faible vitesse. Le paramètre « Réglage », évolue alors entre une valeur haute dite « Réglage dynamique » et une valeur basse dite « Réglage mini », avec « Réglage mini » calculé de la façon suivante :

$$\text{Réglage mini} = \text{Réglage dynamique} - \left( v \bullet \frac{\text{Réglage dynamique} - \text{Réglage économique}}{\text{Seuil vitesse}} \right)$$

où « v » est la vitesse instantanée du véhicule, plafonnée à « Seuil vitesse ».

On a constaté que cela permet d'améliorer l'agrément du véhicule dans les manoeuvres à vitesse faible. La conduite est rendue plus souple par une courbe de pilotage restant plutôt dynamique à basse vitesse. Le seuil vitesse est fixé entre 15 et 30 km/h, par exemple à 20 km/h. Au dessus du seuil vitesse, la gestion du paramètre « Réglage » autorise le pilotage économique.

Dans la variante de réalisation suivante, on donne un cas pratique de programmation de l'unité 31 de pilotage du couple de propulsion qui permet de rendre la réaction de la chaîne de traction aussi dynamique que possible lorsque le conducteur manifeste une volonté de forte accélération par une variation rapide de la position de la pédale d'accélérateur. On utilise la dérivée de la position de la commande d'accélérateur CA pour réaliser cette fonction. La valeur de cette dérivée permet de se rapprocher plus ou moins rapidement de la courbe de pilotage dynamique PD. Après une certaine temporisation, on retourne progressivement vers la courbe de pilotage économique PE.

Consultons à nouveau la figure 4. Supposons que, au départ, on se trouve au point de fonctionnement ① sur la courbe de pilotage économique PE. L'ouverture papillon est à 60 % et le régime est à 1200 tr/min, le moteur fournissant 9000 Watts. Le conducteur souhaite une accélération importante, il appuie brusquement sur la pédale d'accélérateur et lui donne une position telle que l'ouverture papillon devient 80 %. L'analyse de la dérivée du signal donnant la position de la pédale d'accélérateur au cours du temps, par exemple par comparaison à un seuil, a fait basculer sur une courbe de pilotage plus dynamique, c'est à dire tendant vers une courbe telle que PD, alors que le papillon est encore en train de changer de position. La puissance pilotée effectivement est celle correspondant au point de fonctionnement ② , soit 2000 Watts. Il n'y a à ce moment plus équilibre entre la puissance fournie par le moteur thermique et la puissance selon laquelle on pilote les moteurs électriques de traction 21. Le moteur thermique monte donc en régime, ce qui permet l'accélération du véhicule comme on l'a expliqué à l'occasion de la description de la figure 2.

Pour prendre une image, le passage du point de fonctionnement ① vers le point de fonctionnement ② correspond à rétrograder avec une boîte de vitesse manuelle dans un véhicule courant. On se retrouve rapidement au point de fonctionnement ③ . Après une temporisation judicieuse, on peut revenir progressivement vers une courbe de pilotage plus économique. Pour simplifier l'exposé, on peut supposer que le point de pilotage évolue vers le point ④ . De nouveau, il n'y a plus équilibre entre la puissance fournie par le moteur thermique et la puissance déterminant le couple de consigne C. Le moteur thermique 10 est trop chargé. Comme l'unité 31 de pilotage du couple de propulsion travaille maintenant selon la courbe de pilotage économique PE, les puissances vont s'équilibrer au point ⑤ , après une baisse du régime du moteur thermique 10, à position papillon sensiblement constante. En fait, bien entendu, comme les changements de courbe de pilotage sont continus, l'évolution du point de fonctionnement n'est pas aussi abrupte que la lecture de la figure 4 qui vient d'être proposée le laisse supposer.

On peut obtenir le fonctionnement qui vient d'être décrit par l'évolution de programmation suivante :

$$\text{Réglage} = \text{Réglage dynamique} - \left( v \bullet \frac{\text{Réglage dynamique} - \text{Réglage économique}}{\text{Seuil vitesse}} \right) \bullet (1 - k)$$

où « v » est la vitesse instantanée du véhicule, plafonnée à « Seuil vitesse »,

$$k = \frac{D}{\text{Dérivée position accélérateur maxi}}$$

avec D = 0 lorsque la dérivée première par rapport au temps de la position de la commande d'accélérateur CA est négative ou nulle, et D = la valeur de la dérivée première de la position de la commande d'accélérateur CA lorsque ladite dérivée est positive, avec k limité à 1.

Dans certaines conditions, le conducteur peut avoir besoin de toute la puissance durant une longue période. C'est le cas par exemple pour un dépassement. Il est donc avantageux de pouvoir programmer l'unité 31 de pilotage du couple de propulsion pour obtenir l'effet « Kick down » bien connu pour les boîtes de vitesses automatiques des véhicules conventionnels. Le conducteur manifeste son désir par un enfoncement de la commande d'accélérateur CA, allant jusqu'à fond de course, et en maintenant l'enfoncement complet tant que l'on souhaite disposer de toute la puissance.

On utilise bien entendu la courbe de pilotage la plus dynamique possible, à savoir la courbe PD. L'ouverture papillon devient maximale, dans les limites expliquées ci-dessus (saturation du moteur électrique de traction, anti-patinage, ...). Et dans ce cas, le paramètre k garde la valeur 1 tant que le conducteur maintient la pédale d'accélérateur enfoncée. On reste au point de fonctionnement à ouverture maximale de l'actionneur PP, et ce aussi longtemps que la pédale d'accélérateur reste enfoncée.

Dans un mode particulier de réalisation, on peut faire fonctionner les moteurs électriques de traction en générateurs, afin de fournir un effet comparable au frein moteur d'un véhicule conventionnel. Le véhicule est alors équipé d'un dispositif d'absorption d'énergie électrique branché sur ladite ligne électrique via une unité de contrôle de freinage 14. L'unité de contrôle de freinage 14 détecte automatiquement un transfert d'énergie allant dans le sens de la récupération et la dirige dans le dispositif d'absorption d'énergie électrique. Puisque l'on est en freinage, le fonctionnement de l'unité de pilotage du couple 31 a déjà fait prendre à l'actionneur PP une position de ralenti (pour plus de détails, voir la description de la figure 5 ci-dessous). De la sorte, il y a absorption de l'énergie électrique délivrée par ledit moteur électrique de traction lorsqu'il fonctionne en alternateur et qu'il applique au véhicule un effort de freinage.

L'énergie électrique fournie par le ou les moteurs électriques de traction 10, lorsqu'ils fonctionnent en générateurs, est consommée par une charge branchée sur la ligne électrique 12. L'invention présentant la particularité que le pilotage de la chaîne de traction est conçu pour pouvoir fonctionner sans batterie d'accumulateurs en tampon entre l'alternateur 11 et les moteurs électriques 21, le dispositif d'absorption d'énergie électrique peut être une simple résistance électrique 140 de dissipation de l'énergie de freinage. Il est proposé que ledit seuil prédéterminé de la commande d'accélérateur CA soit proportionnel à la vitesse du véhicule.

A la figure 5, les abscisses représentent la position de commande d'accélérateur CA à la disposition du conducteur du véhicule, et les ordonnées représentent la traduction de cette position en commande d'accélération effective $CA_e$ (positive ou négative, et quantifiée). On voit un faisceau de courbes, chaque courbe correspondant à une vitesse du véhicule. Toutes les courbes (sauf une, correspondant à une vitesse de déplacement du véhicule nulle) ont une première partie dans laquelle la demande d'accélération est négative et variable, une deuxième partie dans laquelle la demande d'accélération est positive et variable, et enfin une troisième partie dans laquelle la demande d'accélération est positive et constante.

Les demandes d'accélérations positives permettent à l'unité de pilotage du couple 31 de déterminer un couple de consigne C comme expliqué ci-dessus. Les demandes d'accélérations négatives permettent à l'unité de pilotage du couple 31 de piloter le dispositif d'absorption d'énergie 14, d'envoyer une consigne « ralenti » au dispositif de pilotage de l'actionneur PP (sauf si d'autres organes périphériques branchées sur la ligne 12 demandent plus d'énergie électrique que ce que les moteurs électriques 21 fournissent en phase de frein moteur), et d'envoyer aux onduleurs 22 une consigne de couple C négative, plus ou moins importante. Le couple de freinage (pour rappel, les moteurs 21 sont pilotés en couple) est donc fonction de la position de la pédale d'accélérateur et de la vitesse instantanée du véhicule (voir figure 5). Bien entendu, il convient de limiter le couple de consigne C en fonction du courant maximal admissible par le ou les moteurs électriques de traction 21 et en fonction de la puissance maximale acceptable par la résistance de dissipation ou un dispositif d'absorption d'énergie équivalent installé sur le véhicule.

Qualifions de « position neutre » la position de la commande d'accélérateur CA pour laquelle la demande d'accélération est nulle. Cette position dépend de la vitesse du véhicule. Lorsque la position de la pédale est inférieure à la position neutre, la chaîne de traction fonctionne en frein moteur. Qualifions de « position kick-down » toute position de la commande d'accélérateur CA de la troisième partie des courbes de la figure 5, dans laquelle la demande d'accélération est positive et constante. Entre la position neutre et la position kick-down, le fonctionnement de la chaîne de traction est celui expliqué ci-dessus, avec adaptation automatique et constante entre un pilotage dynamique PD et un pilotage économique PE. Le fonctionnement dans la zone kick-down a aussi été expliqué ci-dessus.

A vitesse nulle, par exemple, le neutre est au zéro de la pédale d'accélérateur, il n'y a donc pas de zone frein moteur et donc pas de possibilité de faire du freinage électrique. Lorsque la vitesse du véhicule augmente, le neutre se déplace, la zone de freinage augmente et celle de traction diminue.

Avantageusement, afin de faciliter les démarrages en côte ou de maintenir le véhicule dans une pente, lorsque la commande d'accélérateur CA est au repos et que la vitesse de déplacement du véhicule est nulle, tant que le conducteur du véhicule ne sollicite pas la commande d'accélérateur CA, l'unité de pilotage du couple de propulsion calcule un couple de consigne C de façon à maintenir à une valeur nulle la vitesse du véhicule.

Bien entendu, pour récupérer de l'énergie au freinage, on pourrait utiliser un moyen de stockage de l'énergie électrique, comme une batterie d'accumulateurs électrochimiques, ou tout dispositif équivalent. Avantageusement, la capacité de stockage est modérée (pour ne pas alourdir le véhicule), et le dispositif de pilotage 32 tend à d'abord vider la batterie en cas de demande d'accélération du véhicule indiquée par la commande d'accélérateur CA, avant d'agir sur l'actionneur PP.

**Revendications**

1. Chaîne de traction pour véhicule hybride série comportant

   - un moteur thermique (10) entraînant un alternateur (11), ledit moteur thermique ayant une puissance disponible à l'arbre de sortie du moteur thermique,
   - au moins un moteur électrique de traction (21) connecté à l'alternateur par une ligne électrique (12) et un onduleur (22), l'onduleur permettant de faire fonctionner le moteur électrique de traction à un couple de consigne, la ligne électrique permettant le transfert d'une puissance électrique de traction,
   - une commande d'accélérateur CA à disposition du conducteur du véhicule ;
   - un actionneur (15) agissant sur le moteur thermique ;
   - un dispositif de pilotage (32) pilotant la position de l'actionneur en fonction de la position de la commande d'accélérateur, jusqu'à une limitation au moins lorsque le couple de consigne atteint le couple maximal du moteur électrique de traction ;
   - une unité de pilotage (31) du couple de propulsion du véhicule, permettant de calculer en permanence ledit couple de consigne en fonction de la vitesse du véhicule et en fonction d'une puissance de pilotage P évaluant la puissance disponible à l'arbre de sortie du moteur thermique en fonction du régime réel du moteur thermique.

2. Chaîne de traction selon la revendication 1 dans laquelle la puissance de pilotage P est évaluée de la façon suivante :

$$P = \text{Pmax} \cdot \left( \frac{\text{Régime - Régime ralenti}}{\text{Régime maxi - Régime ralenti}} \right)^{\text{Réglage}},$$

où « Réglage» est un paramètre de fonctionnement, « Régime» est le régime du moteur thermique au moment du calcul, « Régime ralenti » est le régime du moteur thermique au ralenti, « Régime maxi » est le régime du moteur thermique utilisé au point de puissance maximale.

3. Chaîne de traction selon la revendication 2, dans laquelle le paramètre « Réglage », à partir d'une valeur maximale « Réglage dynamique », tend vers une valeur « Réglage économique », et prend à nouveau rapidement la valeur « Réglage dynamique » en cas d'action rapide sur la commande d'accélérateur CA visant à accélérer le véhicule.

4. Chaîne de traction selon la revendication 2, dans laquelle le paramètre « Réglage », évolue entre une valeur haute dite « Réglage dynamique » et une valeur basse dite « Réglage mini », avec « Réglage mini » calculé de la façon suivante :

$$\text{Réglage mini} = \text{Réglage dynamique} - \left( v \bullet \frac{\text{Réglage dynamique} - \text{Réglage économique}}{\text{Seuil vitesse}} \right)$$

où « v » est la vitesse instantanée du véhicule, plafonnée à « Seuil vitesse ».

5. Chaîne de traction selon la revendication 2, dans laquelle le paramètre « Réglage » est calculé de la façon suivante :

$$\text{Réglage} = \text{Réglage dynamique} - \left( v \bullet \frac{\text{Réglage dynamique} - \text{Réglage économique}}{\text{Seuil vitesse}} \right) \bullet \left( 1 - k \right)$$

où « v » est la vitesse instantanée du véhicule, plafonnée à « Seuil vitesse »,

$$k = \frac{D}{\text{Dérivée position accélérateur maxi}}$$

avec D = 0 lorsque la dérivée première par rapport au temps de la position de la commande d'accélérateur CA est négative ou nulle, et D = la valeur de la dérivée première de la position de la commande d'accélérateur CA lorsque ladite dérivée est positive, avec k limité à 1.

6. Chaîne de traction selon l'une des revendications 1 à 5, comportant en outre un dispositif d'absorption d'énergie électrique branché sur ladite ligne électrique via une unité de contrôle de freinage (14), ladite unité de contrôle de freinage étant activée lorsque la commande d'accélérateur CA est sous un seuil prédéterminé, de façon à commander à l'unité de pilotage l'envoi au moteur électrique d'une consigne C de couple freineur, et de façon à faire prendre à l'actionneur PP une position de ralenti.

7. Chaîne de traction selon la revendication 6, dans laquelle ledit seuil prédéterminé de la commande d'accélérateur CA est proportionnel à la vitesse du véhicule.

8. Chaîne de traction selon l'une des revendications 6 ou 7, dans laquelle le dispositif d'absorption d'énergie électrique comporte un moyen de stockage de l'énergie électrique.

9. Chaîne de traction selon la revendication 8, dans laquelle le dispositif de pilotage (32) tend à d'abord vider la batterie en cas de demande d'accélération du véhicule indiquée par la commande d'accélérateur CA, avant d'agir sur l'actionneur PP.

10. Chaîne de traction selon l'une des revendications 1 à 9, dans laquelle les moyens de pilotage de l'actionneur PP calculent en permanence, à chaque itération, une position limite comme suit :

$$\text{Limite position papillon} = \text{Position papillon maxi} - k^{*}(P_{thd} - P_a - P_t).$$

11. Chaîne de traction selon l'une des revendications 1 à 10, dans laquelle l'unité de pilotage (31) du couple de propulsion du véhicule calcule ledit couple de consigne selon une période d'échantillonnage choisie.

Fig. 1

Fig. 2

Fig. 3

Fig. 4

Fig. 5

**Office européen des brevets**

## RAPPORT DE RECHERCHE EUROPEENNE

Numéro de la demande

EP 02 00 4997

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 6 155 954 A (DEGUCHI YOSHITAKA ET AL) 5 décembre 2000 (2000-12-05) | 1,11 | B60L11/12 B60K41/00 B60K6/02 |
| Y | * abrégé * * figures 1,2,5,6,9-11 * * colonne 7, ligne 30 - ligne 57 * * colonne 9, ligne 13 - ligne 60 * * revendications 1,2,9,10,16,17 * | 6-9 | |
| Y | US 5 935 040 A (IBARAKI RYUJI ET AL) 10 août 1999 (1999-08-10) | 6-9 | |
| A | * abrégé * * figures 2,5-8 * * revendications 1-5,7-9 * | 10 | |
| A | US 5 993 351 A (DEGUCHI YOSHITAKA ET AL) 30 novembre 1999 (1999-11-30) * figure 29 * | 2 | |

| | DOMAINES TECHNIQUES RECHERCHES (Int.Cl.7) |
|---|---|
| | B60L B60K |

Le présent rapport a été établi pour toutes les revendications

| Lieu de la recherche | Date d'achèvement de la recherche | Examinateur |
|---|---|---|
| LA HAYE | 3 juillet 2002 | Vanata, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 00 4997

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-07-2002

| Document brevet cité au rapport de recherche | | Date de publication | Membre(s) de la famille de brevet(s) | | Date de publication |
|---|---|---|---|---|---|
| US 6155954 | A | 05-12-2000 | JP | 2000097070 A | 04-04-2000 |
| | | | DE | 19945449 A1 | 30-03-2000 |
| US 5935040 | A | 10-08-1999 | JP | 10037776 A | 10-02-1998 |
| US 5993351 | A | 30-11-1999 | JP | 11178110 A | 02-07-1999 |

EPO FORM P0460

Pour tout renseignement concernant cette annexe : voir Journal Officiel de l'Office européen des brevets, No.12/82